(19) Europäisches Patentamt
European Patent Office
Office européen des brevets

(11) Publication number: 0 372 938 B1

(12) **EUROPEAN PATENT SPECIFICATION**

(45) Date of publication of patent specification: **08.09.93** (51) Int. Cl.[5]: **C10G 25/03**, B01J 29/28

(21) Application number: **89312734.0**

(22) Date of filing: **06.12.89**

(54) **Zeolite composition for use in olefinic separations.**

(30) Priority: **07.12.88 US 281311**

(43) Date of publication of application:
**13.06.90 Bulletin 90/24**

(45) Publication of the grant of the patent:
**08.09.93 Bulletin 93/36**

(84) Designated Contracting States:
**BE DE FR GB IT NL**

(56) References cited:
**EP-A- 0 031 676**
**BE-A- 665 809**
**US-A- 4 444 900**

(73) Proprietor: **EXXON RESEARCH AND ENGINEERING COMPANY**
**P.O.Box 390, 180 Park Avenue**
**Florham Park, New Jersey 07932(US)**

(72) Inventor: **Bellows, Richard James**
**73, Country Acres Drive**
**Hampton New Jersey 08827(US)**
Inventor: **Savage, David William**
**76D, McCatharn Road**
**Lebanon New Jersey 08833(US)**
Inventor: **Kantner, Edward**
**13, Stephens Drive**
**East Brunswick New Jersey 08816(US)**

(74) Representative: **Fletcher Watts, Susan J. et al**
**ESSO Engineering (Europe) Ltd. Patents & Licences Mailpoint 72 Esso House Ermyn Way**
**Leatherhead, Surrey KT22 8XE (GB)**

EP 0 372 938 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a zeolite composition for use in olefinic separation, and to a process for separating n-olefins, and optionally n-paraffins, from hydrocarbon mixtures.

The separation of linear and lightly-branched olefins from highly-branched olefins and other hydrocarbons, including aromatics, is understandably important. Linear and lightly-branched olefins are valuable as feeds to the hydroformylation (Oxo) process for making linear alcohols. Linear α-olefins are valuable molecules for the synthesis of high-value added polymers and other products. It is particularly desirable to develop a process for separating linear olefins from low-valued refinery streams such as FLEXICOKER naphthas and distillates.

The separation of olefins from other hydrocarbon types using zeolite adsorbents has been limited by the tendency of these materials, which contain acidic sites, to cause olefin side reactions including isomerization, oligomerization and polymerization. U.S. patent 3,969,223 to UOP claims the use of a zeolite adsorbent to separate olefins from paraffins which has been treated with an aqueous caustic solution to effect the addition of alkali metal cation to the crystalline structure to decrease catalytic activity, but this technique will not separate olefins from aromatic-containing feeds.

Acidic activity in zeolites has been identified as due to both Bronsted and Lewis acid sites. Clearly the existence of protons in the structure can lead to acidity but in addition, many other sites are suspected. The structures of acidic sites are difficult to identify and the whole area is subject to great debate. Additional acidity can come from non-framework aluminum species. The as-received silicalite contains acidic activity even at room temperature.

In one aspect the present invention provides a process for the separation of $C_5$ to $C_{19}$ n-olefins and n-paraffins from a feed mixture comprising aliphatic and aromatic hydrocarbons, which process comprises:

contacting the feed mixture with a zeolite adsorbent which has been treated with an acid and then with a base and which has a silica to alumina ratio of at least 20 and a pore diameter of from 3.5 to 7.0 x $10^{-10}$ m (3.5 to 7.0A); said contacting being conducted under conditions sufficient to effect selective adsorption of n-olefins and n-paraffins by the zeolite; and

desorbing adsorbed n-olefins and n-paraffins.

The present invention also provides a zeolite composition comprising a zeolite adsorbent which has been treated with an acid and then a base and which has the aforesaid silica to alumina ratio and pore diameter.

An attractive feature of the present separation process is that it can utilize low cost olefinic hydrocarbon feeds which also contain not only aliphatic hydrocarbons and aromatic hydrocarbon but sulfur compounds as well. Such olefinic hydrocarbon feeds are produced by the high temperature thermal cracking of petroleum residua, particularly vacuum resids. These feeds contain high concentrations of linear terminal (i.e. α-) olefins of Type I and linear internal olefins of Type II.

The important feature of the present separation is the use of a neutral molecular sieve which minimizes the olefin side reactions and allows the separation of 1-n-olefin - n-paraffin mixtures without any major terminal, e.g. olefin to internal olefin isomerization. In the present process, preferably low alumina zeolites, such as silicalite having less than 5000 ppm alumina are used for selective adsorption.

From the viewpoint of process economics, it is most important that the present process can use feeds containing substantial amounts of aromatic components. The preferred feeds of the present separation process are olefinic distillates produced from petroleum residua by high temperature thermal cracking. Such cracked distillates are preferably produced from vacuum residua by Fluid-coking or Flexicoking. These distillates contain 1-n-olefins as the major type of olefin components and organic sulfur.

This invention teaches the separation of linear and lightly-branched olefins from hydrocarbon streams using high-silica zeolite molecular sieves in which the limiting pore aperture providing access to the internal pore volume of the crystals is formed from 10 membered oxygen rings (approx. 5.5-60Å diameter). Examples of such sieves include silicalite, ZSM-5, ZSM-12, etc. Rings of this size will admit linear/lightly-branched olefins and linear/lightly branched paraffins, but will exclude other hydrocarbon types, including aromatics. The high-silica zeolite molecular sieve is rendered inert towards olefin isomerization, oligomerization and polymerization by modifying it by first treating the zeolites with acid and then treating the zeolite with base.

This treatment has been shown to remove acidic sites from the internal and external surfaces of the crystals, thus preventing olefin side reactions, and allowing the linear and lightly-branched olefins to be recoverd in high purity by desorption.

## DESCRIPTION OF PREFERRED EMBODIMENTS

The process of the present invention can be employed in the separation of $C_5$ to $C_{19}$ preferably $C_9$ to $C_{19}$ mixtures of n-olefins and n-paraffins, preferably 1-n-olefins and n-paraffins, from a mixture of aliphatic and aromatic hydrocarbons and organic sulfur compounds, specifically in concentrations equivalent to from about 0.05% to about 3% sulfur. The selective adsorption is conducted preferably from the liquid phase under pressure sufficient to maintain liquid phase, and in the temperature range of 10°C to 250°C, more preferably 20°C to 150°C, most preferably 100°C to 140°C. Desorption may be conducted by contacting the resulting sieve containing the n-olefin and n-paraffin enriched extract with a more volatile desorbent gas and/or liquid, preferably liquid, under pressure sufficient to maintain liquid phase; preferably an n-olefin and n-paraffin, more preferably an n-olefin, under conditions sufficient to effect displacement from the sieve of said extract; preferably under conditions of the adsorption step.

Preferably the separation of $C_9$ to $C_{19}$ mixtures of n-olefins and n-paraffins from aliphatic and aromatic hydrocarbons and, optionally, sulfur containing compounds, is conducted in the liquid phase and in the temperature range of 80°C and 200°C, preferably 100°C to 150°C, for a sufficient time to effect adsorption, and desorbing the resulting n-olefin n-paraffin and n-olefin enriched extract from the sieve with a more volatile olefin as described above.

Advantageously, the feedstream for the process of the present invention comprises an olefinic cracked distillate feed produced from petroleum residua by high temperature thermal cracking, preferably Fluid-coking or Flexicoking, and containing 1-n-olefins as the major type of olefin components, the percentage of Type I olefins preferably exceeding 30 wt% of the total olefins, and organic sulfur compounds, preferably in concentration exceeding about 0.05%, more preferably in the concentration range of about 0.3% to about 3%.

Most advantageously the feedstream for the process of the present invention comprises an olefinic cracked distillate feed produced from vacuum residua by high temperature thermal cracking in a Fluid-coker or Flexicoker unit; which contains more than 20% olefins, more than 30% of said olefins being of Type I, and additionally contains organic sulfur compounds in concentrations exceeding 0.3% sulfur.

## SPECIFIC DETAILS OF THE EMBODIMENTS

The specific details of the embodiments of the present invention will be discussed in terms of the hydrocarbon feeds of the present separation process and the zeolite adsorbents employed. Thereafter, the conditions of the selective adsorption of n-olefin - n-paraffin mixtures will be described. The description of the separation process will conclude with that of the desorption step.

### Hydrocarbon Feeds

The preferred hydrocarbon feeds contain major amounts of olefins, paraffins and aromatic compounds. The feeds may also contain significant amounts of sulfur compounds. A detailed description of the most preferred feeds, i.e. distillate feeds, produced from petroleum residua by high temperature thermal cracking processes such as Fluid-coking and Flexicoking, is found in U.S. patent 4,711,968.

The olefin compounds of the feed are preferably in concentrations exceeding about 10 wt.%, more preferably about 20 wt%, most preferably about 30%. In the preferred olefinic feeds, the normal, i.e. linear, olefins are the major olefin component. More preferably, the largest single type of olefin is Type I, of the formula $RCH=CH_2$, representing 20% or more of the total olefins. The prevalent specific olefins ore 1-n-olefins. Some preferred olefin feed components are 1-pentene 3-hexene, 3-methyl-2-pentene, 1-octene, trans-2-decene, tetradecene, 1-octadecene.

The paraffin components are preferably in concentrations similar or lower concentrations than those of the olefins or lower, the normal paraffins being the major paraffin component. Exemplary paraffins are n-pentane, cyclohexane, n-octane, n-decane, 2-methylnonane, decalin, hexadecane.

The aromatic hydrocarbon components preferably represent from about 1 to about 60 wt.% of the feed more preferably about 10 to 60 wt.%. The preferred aromatic hydrocarbons are either unsubstituted or substituted by short $C_1$ to $C_3$ alkyl groups such as benzene, p-xylene, 1-methyl-4-ethylbenzene, 1,2,3-trimethylbenzene, naphthalene, 2-methylnaphthalene, phenanthrene.

The sulfur compounds are usually present as impurities in the hydrocarbon feed. The present process is preferred for feeds of relatively high sulfur content, 0.05 wt.% or above and can handle feeds having sulfur concentrations ranging from about 0.3 to 3% sulfur. The sulfur compounds are usually present as thiol and/or aromatic sulfur compounds. Aromatic sulfur compounds, such as thiophenes, benzothiophenes

and dibenzothiophenes are preferred. These aromatic sulfur compounds can be substituted by one or more short chain alkyl groups, preferably $C_1$ to $C_3$ alkyl, more preferably methyl.

The preferred olefinic distillate feeds of the present invention are produced from petroleum residua by high temperature thermal cracking. The percentage of the most desired 1-n-olefin components of such feeds generally increases with the temperature of cracking. Therefore, the distillate products of high temperature thermal cracking processes such as Fluid-coking and Flexicoking are preferred feeds for the present process. Delayed coking which is normally operated at lower temperatures can also produce suitable feeds for the present process although these feeds contain higher concentrations of n-paraffins than 1-n-olefins. Other less preferred, but suitable, generally milder cracking processes to produc feeds for the present invention are the thermal cracking of gas oils and the vis-breaking of vacuum residues.

The preferred feeds of Fluid-coking and Flexicoking are highly olefinic with olefin concentrations exceeding 20 wt.%, preferably 30%. The aliphatic hydrocarbons are semilinear in character. The main components are linear, i.e. normal olefins and normal paraffins. The largest specific type of compounds are 1-n-olefins followed by n-paraffins. The majority of olefins are Type I and Type II olefins as indicated by the following tabulation showing approximate concentration ranges determined by proton magnetic resonance spectrometry (NMR),

$RCH=CH_2$ $RCH=CHR$ $R_2C=CH_2$ $R_2C=CHR$ $R_2C=CR_2$ Type I Type II Type III Type IV Type V ‾25-45% 15-25% 10-20% 10-20% Not indicated

The R groups in the formulas of the various types of olefins can be straight chain or branched alkyl groups. However, the alkyl groups of the preferred coker olefins of Type I and Type II are predominantly either straight chain or monomethyl branched. Additionally, the Type III and Type IV olefin components of these preferred feeds predominantly possess a methyl group as one of the alkyl groups on the completely substituted vinylic carbon. NMR also indicated the presence of minor amounts of conjugated dienes ranging from about 2 to about 10% concentration. The concentration of the various olefins generally decreases with their molecular weight, i.e. carbon number. Therefore, coker distillates having more than 19 carbons per molecule are less preferred.

The paraffin components of the preferred coker distillate feeds are present in concentrations similar to but smaller than the olefin components. The n-paraffins are the major single types of paraffins present. The branched paraffins are largely methyl branched. Monomethyl branched paraffins are prevalent.

The aromatic hydrocarbons of the present feeds have a concentration range from about 6% to about 50%. The percentage of the aromatic components increases with the carbon number of he distillate fractions. Of course the percentages of olefins and paraffins decrease accordingly. In the preferred $C_9$ to $C_{19}$ carbon range the concentration of aromatics is between 10 and 50%.

The aromatic hydrocarbon components of these feeds are predominantly unsubstituted parent compound such as benzene or substituted with methyl groups such as toluene. The concentration of ethyl substituted compounds is much smaller. Propyl substituted aromatics are present in insignificant amounts. Up to 12 carbon atoms, the aromatics are benzenoid hydrocarbons. From $C_{12}$ to $C_{15}$ most aromatics are of the naphthalene type. Among the higher carbon number hydrocarbons most aromatics are three member fused ring compounds such as anthracenes and phenanthrenes.

The concentration and type of sulfur compounds in the preferred coker distillates depend on their carbon number. The sulfur concentrations range from 0.1% to 3%. In general, sulfur concentrations increase with the carbon number to about 3%. In the $C_5$ to $C_7$ carbon range there are major amounts of thiols present. The $C_8$ and higher fractions contain mostly aromatic sulfur compounds, mostly of the thiophene type. The structure of aromatic thiol components is similar to those of the aromatic hydrocarbons. Methyl and ethyl substituted thiophenes are present in decreasing amounts. Alkylthiophenes are the major sulfur compounds in the $C_8$ to $C_{11}$ range. Benzothiophenes are mostly present in the $C_{12}$ to $C_{15}$ range. In the higher boiling fractions, dibenzothiophenes are major sulfur compound components.

## Zeolite Adsorbents

The zeolite adsorbents of the present process are molecular sieves which include not only crystalline alumino-silicates but aluminophosphates, silicalite and similar microporous crystalline materials. Zeolites either possess an internal pore system comprised of interconnected cagelike voids or a system of one, two or three dimensional channels. The zeolite minerals mordenite and chabazite are examples of these two types. Zeolites are mainly used as catalysts for chemical conversions and adsorbents for separations. They are described as "Molecular Sieves" in Kirk-Othmer's Encyclopedia of Chemical Technology', published by J. Wiley & Sons of New York. More detailed information is available in two monographs, entitled "Zeolite Molecular Sieves" and "Zeolites and Clay Minerals as Sorbents and Molecular Sieves" by D.W. Breck and

R.M. Barrer, respectively. These monographs were published by the R.E. Krieger Publishing Co, Malabar, Florida, in 1984 and by Academic Press, New York, N.Y. in 1978. They are incorporated as references.

Separations based on the molecular sieve effect generally employ dehydrated zeolites. Zeolites can selectively adsorb molecules based upon differences in molecular size, shape and other properties such as polarity.

The zeolite adsorbents of the present invention possess pore diameters ranging from 3.5 to 7.0 x $10^{-10}$ m (3.5 to 7 °A). Zeolites of this pore diameter range from chabazite to ZSM-5 and silicalite. Such zeolites can adsorb n-paraffins and 1-n-olefins while rejecting bulky hydrocarbon molecules such as branched olefins, branched paraffins and $C_9$ and higher aromatic hydrocarbons. The other important characteristics of the preferred zeolites is their reduced polarity which increases their affinity toward aliphatic rather than aromatic hydrocarbons. To produce a reduced polarity, i.e. increased hydrophobic character, the silica to alumina ratio of the present zeolites is preferably above 20, more preferably above 30 such as ZSM-5 and silicalite. U.S. Patent 3,702,886 describes ZSM-5. Similar zeolites are ZSM-12 described in U.S. Patent 3,709,979 and ZSM-11 described in U.S. Patent 3,832,449.

The silica to alumina ratio of zeolites is increased by acid treatment which removes some of the alumina. Thin reduces the acidity and the polarity of the thus treated zeolite. Acid treatment can also affect pore size. These combined effect increase the adsorptive capacity and selectivity of zeolites while reducing the extent of undesired side reactions.

It has been discovered that the sodium or ammonium derivative of the zeolite which has been previously acid treated shows improved selectively in the adsorption of 1-n-olefins and n-paraffins as compared to either the untreated zeolite or the acid treated zeolite. It is preferred to employ their sodium derivatives. Such derivatives can be prepared by the neutralization of protonated zeolites by the appropriate base or salt, such as aqueous sodium hydroxide or with ammonia gas. Such a base treatment can also effect advantageously the pore diameter and shape of the zeolite. Change in the cations also results in electric field effects, resulting in different interactions with adsorbate molecules. For example, the calcium exchanged form of the synthetic zeolite A has a pore diameter of 4.2 °A. This sieve is referred to as 5A. The natural zeolite, chabazite, is another aluminosilicate with a similar pore diameter. The preferred ZSM-5 is a high Si/Al ratio sodium aluminosilicate having a pore diameter above 5 °A. The sodium form of ZSM-5 can be prepared from either the corresponding quaternary ammonium derivative via thermal decomposition and neutralization or by direct synthesis.

The preferred zeolite adsorbents are silicalite which topologically resembles ZSM-5 and contains the same type of building unit. The two sets of intersecting channels of silicalite have pore sizes ranging from 5.2 to 5.7 x $10^{-10}$ m (5.2 to 5.7 °A). Silicalite contains no exchangeable cations and as such it is highly non polar with high affinity for nonpolar hydrocarbon molecules.

Commerically available silicalite from Union Carbide Corporation contains significant amounts, about 0.5%, of aluminum as $Al_2O_3$. Significant amounts of this impurity can be removed by acid treatment. The resulting low alumina (about 0.3% Al) silicalite is then treated with a base to neutralize and remove acid impurities contained within the molecular structure of the zeolites.

The crystalline zeolite adsorbents are usually formed into spheres or cylindrical pellets which have high mechanical attrition resistance. This is achieved using binders which do not seriously hinder diffusion in the micropores. Silica, alumina and crosslinked organic polymers can be employed as binders.

Adsorption

Adsorption by zeolite molecular sieves is performed using gaseous and liquid feeds. In the present process, zeolites are regenerated and used for many adsorption-desorption cycles.

The present invention comprises the selective adsorption of n-olefins from a mixture of n-olefins and branched chain olefins or of both n-olefins and n-paraffins from a mixture of aliphatic and aromatic hydrocarbon compounds. The preferred feed mixtures are in the $C_5$ to $C_{19}$ range. Preferably 1-n-olefins and n-paraffins are mainly adsorbed from a feed richer in terminal 1-n-olefins than internal n-olefins. Such preferred feeds are the distillates produced from petroleum residua by high temperature thermal cracking. These feeds additionally contain sulfur compounds.

The absence of catalytic side reactions such as isomerization is particularly important for recovering a mixture of 1-n-olefins and n-paraffins. 1-n-Olefins are particularly subject to isomerization resulting in internal olefins. In general, internal olefins are less desired than terminal olefins.

Working with an acid-base treated silicalite, it was unexpectedly found in the present invention that the 1-n-olefin components of the $C_9$ to $C_{15}$ feeds are preferably adsorbed over the corresponding n-paraffins. The trans-isomers of the internal linear olefins and 1-olefins are adsorbed at comparative rates. Little

adsorption of the very minor cis-isomers occurs. In case of the minor conjugated linear diene components, such as transpiperylene, a selective adsorption is also observed.

In addition to the selective adsorption of 1-n-olefins and n-paraffins, selective adsorption or rejection of aromatic sulfur compounds was observed, using ZSM-5 and silicalite. It was found that the thiophenic sulfur compound components of $C_5$ to $C_8$ cracked distillates derived from residua are selectively adsorbed in the present process. The adsorption of 2,5-dimethylthiophene is surprising in view of the rejection of toluene components of very minor concentrations. The adsorption of these sulfur compounds however, does not interfere with the production of 1-n-olefin plus n-paraffin rich extracts. If desired the minor aromatic sulfur compounds can be removed from the extracts, e.g. by chemically modified adsorbents, before any subsequent chemical conversion. The benzothiophene type sulfur compounds present in the higher carbon distillates were not adsorbed.

It was found that silicalite is a size selective adsorbent for certain monomethyl branched olefins. 3-Methyl-2-pentene was selectively adsorbed, while 2-methyl-2-pentene, 2-methyl-1-pentene and 4-methyl-2-pentene, were not. Some adsorption of $C_8$ and higher carbon 2-methyl-1-alkenes and 2-methylalkanes was observed. However, their presence in minor amounts in the extracts of coker distillates does not interfere with the use of such extracts in synlube preparation.

The adsorption occurs on contacting the hydrocarbon feed and the zeolite at a temperature wherein the molecules to be adsorbed have a sufficient energy to overcome the repulsive interaction with the zeolite and pass through the aperture of the zeolite channels and reversibly fill the micropores. To achieve sufficient adsorbate diffusion rates, increased temperatures are needed to overcome the activation energy requirements of molecules of increasing size and/or molecular weight.

Generally, preferred adsorption temperatures are in the 10 to 250 °C range. Adsorption of the low molecular weight, $C_5$ to $C_8$ distillate, feeds can be carried out at low temperatures, in the 10 to 100 °C regime. The adsorption of $C_9$ to $C_{19}$ fractions at optimum diffusion rates requires increasing temperatures, ranging from 100 to 200 °C. However, the optimum temperatures of the present adsorption process are limited by the need to avoid 1-n-olefin isomerization and cracking. The choice of adsorption temperature also depends on the carbon range of the hydrocarbon feed. Broad distillate feed cuts are processed at temperatures higher than warranted for their low boiling components.

Gas phase adsorption is carried out preferably at close to atmospheric pressures in a temperature range wherein the feed is in the gaseous state. Similarly, liquid phase adsorption is performed at temperatures where the feed is liquid. When processing a volatile feed, such as $C_5$, in the liquid phase, above atmospheric pressure may be used. In general, a liquid phase operation is preferred because it can be usually carried out at a lower temperature providing a higher extract yield.

Desorption

Desorption, i.e. the removal of the n-olefin or the n-olefin and n-paraffin rich extract from the zeolite adsorbents, can be carried out under varying conditions as part of the adsorption-desorption cycle. A thermal swing cycle comprises desorption at a temperature higher than that for the adsorption. Similarly, a pressure swing cycle employs reduced pressure to effect desorption. An isothermal purge cycle employs a non-adsorbed liquid to strip the adsorbate from the voids and eventually from the pores of the zeolite. Finally, the displacement purge cycle employs a desorbent which is equally or more strongly adsorbed than the adsorbate. This desorbent is then displaced by the adsorbate in the adsorption cycle. For further information, reference is made to an earlier quoted discussion of Molecular Sieves in Kirk-Othmer's Encyclopedia of Chemical Technology.

The preferred desorption is part of a displacement purge cycle. This cycle is preferably practiced as outlined by D.B. Broughton in U.S. Patent 2,985,589 and a paper entitled "Continuous Adsorptive Processing-A New Separation Technique", presented at the 34th Annual Meeting of the Society of Chemical Engineers at Tokyo, Japan on April 2, Broughton particularly described a simulated moving bed countercurrent process flow scheme preferred in the process of the present invention.

In general, a variety of compounds such as $CO_2$, $NH_3$, methane, butane, and butene can be used in the desorption step. In the case of $NH_3$ being used in the desorption step, the zeolite is regenerated to its previous state of the acid-base treated zeolite which was used in the adsorption step. However, except in the case of $NH_3$, for a preferred operation in the liquid phase using the displacement purge cycle, n-paraffins and/or n-olefins, particularly 1-n-olefins are the choice desorbents. These preferred desorbents are liquids which are lower boiling than the feed. In a preferred operation, the boiling point of the desorbent should be low enough for easy separation from the feed by distillation but high enough so as to assure that the specific gravity and viscosity of the feed are not drastically different from that of the feed. The latter

facilitates smooth feed and extract displacement by liquid flow through the adsorbent bed.

Exemplary desorbing agents include, n-pentane for a $C_6$ feed, 1-hexene for a $C_7$ to $C_9$ feed, 1-n-octene for a $C_9$ to $C_{13}$ feed. In contrast to the prior art, 1-n-octene is a preferred desorbent in the present process. Even though 1-n-octene may not be completely separated from the 1-n-olefin n-paraffin rich extract, its presence is not objectionable in the subsequent conversions of the olefin components.

In a preferred operation a broad feed fraction, such as $C_8$ to $C_{15}$, is employed and the low boiling part of the extract, e.g. a mixture of $C_8$, $C_9$ n-olefins and n-paraffins, is used as a desorbent. In such an operation, the low boiling components of the extract are distilled and used as desorbents.

The broad temperature range of desorption is generally the same as that of the adsorption. In the isothermal or nearly isothermal process cycles, such as the preferred displacement-purge cycle and the stripping cycle, the preferred temperature ranges for desorption and adsorption are similar by definition.

With the exception of the pressure swing cycle, the pressure ranges of adsorption and desorption are generally similar. Close to atmospheric cycles are preferred. In a preferred liquid phase cycle, the use of a low boiling desorbent such as n-butane may require superatmospheric pressure.

Adsorption-desorption cycles of the present process are operated in a temperature regime where no significant olefin side reactions take place. Nevertheless, the zeolite adsorbents have finite lifetimes due to minor side reactions resulting in pore plugging. Regeneration of the thus deactivated zeolite is generally possible by calcination which results in the burning off of organic impurities.

The olefin components of n-olefin plus n-paraffin mixtures obtained in the present separation process may advantageously be converted to higher boiling derivatives and then separated from the unreacted n-paraffins. These conversions generally comprise known chemical reactions and processes. As examples of conversions are oligomerization, alkylation of aromatics and carbonylation.

Our copending European Patent Application 89312735.7, EP-A-0,372,939, relates a separation process followed by oligomerization of separated olefin components.

Another preferred conversion of the n-olefin components of the n-olefin plus n-paraffin mixtures involves the acid catalyzed alkylation of aromatic compounds. Exemplary reactants are benzene, toluene, o-xylene, naphthalene and phenol. Benzene alkylation by n-olefins is important in the preparation of the linear alkylbenzene intermediates of biodegradable aqueous alkylbenzene sulfonate detergents and oil soluble linear alkylbenzene sulfonates. Benzene alkylation can be effected with $AlCl_3$ as a catalyst by known methods at temperatures between 0 and 100 °C.

Phenol alkylation by n-olefins leads to linear alkylphenol intermediates of ethoxylated surfactants. Phenol is highly reactive and can be readily alkylated in the presence of a crosslinked sulfonated styrene-divinyl benzene resin, Amberlyst 15, at 80 to 150 °C.

After the alkylation of the aromatic compounds the unconverted olefins and other volatile components are removed by distillation.

A third preferred conversion is the carbonylation of the n-olefin components of the n-olefin plus n-paraffin extracts. Carbonylation is a reaction with carbon monoxide and an active hydrogen compound to provide a carbonyl derivative of said olefin reactant. In case of the preferred 1-n-olefin components the main reaction is the following:

$$RCH=CH_2 + CO + HX \rightarrow RCH_2CH_2COX$$

R = n-alkyl, x = H, OH, OR

The preferred carbonylation catalysts are Co and Rh carbonyl complexes. The preferred carbonylation leading to aldehydes in hydroformylation.

$$RCH=CH_2 \xrightarrow{CO/H_2} RCH2CH_2CHO + RCH(CH_3)CHO$$

Similar hydroformylation catalysts and conditions are applicable to the n-olefin plus n-paraffin extracts of the present invention. The preferred feed of the present carbonylations is also Flexicoker based. It contains mainly 1-n-olefins and n-paraffins separated from Flexicoker distillates.

The preferred n-olefin - n-paraffin mixtures employed as carbonylation feeds are of a relatively narrow carbon range, containing components having 3 different adjacent carbon atoms or less. This allows the separation of the unconverted paraffin components and paraffin by-products from the carbonyl compound products. In case of hydroformylation the aldehyde product may be hydrogenated to the corresponding

alcohols prior to paraffin removal by hydrogenation.

For polymerizations and copolymerizations aimed at producing high molecular weight polymers, single carbon 1-n-olefin - n-paraffin mixtures are preferred. For example, a mixture of 1-n-hexene and n-hexane produced by the present process can be used to produce an ethylene-hexene copolymer. Similar single carbon 1-n-olefin - n-paraffins are preferably used in other olefin conversions such as hydroboration and epoxidation.

## BRIEF DESCRIPTION OF THE FIGURES

Figure 1 illustrates the capillary gas chromatogram of a sharp $C_{10}$ Flexicoker distillate fraction, which was most frequently used as a feed for zeolite separations.

Figure 2 illustrates the desorption, by n-hexane in a pulse test, of aromatic raffinate components and a 1-n-decene plus n-decane extract.

Figure 3 illustrates the capillary gas chromatogram n-decenes plus n-decane extract of the $C_{10}$ Flexicoker distillate fraction, said extract having been obtained in the pulse test.

Figure 4 shows how untreated silicalite isomerizes 1-hexene as compared to acid-base treated silicalite which leaves the 1-hexene unreacted.

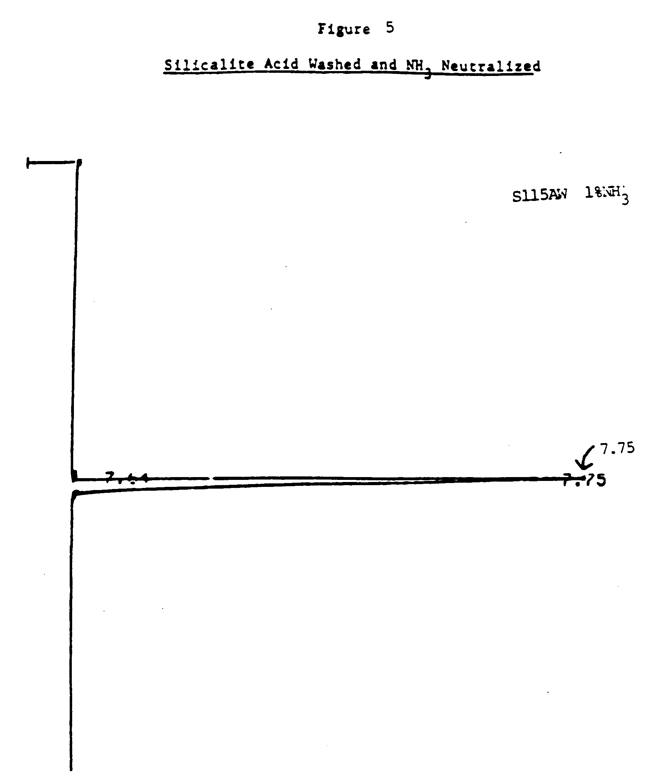

Figure 5 shows how said washed silicalite when neutralized with gaseous ammonia was equally effective in leaving 1-hexene unreacted.

## Examples

The following examples are provided to illustrate the presently claimed process but are not intended to limit the scope of the invention. Most of the Examples describe the novel selective adsorption in zeolites, particularly silicalite and the sodium form of ZSM-5, of n-olefin - n-paraffin mixtures. Adsorption studies of feeds consisting of model compounds and 1-n-olefin rich cracked distillates derived from petroleum residua will be presented side by side. The desorption step of the present adsorptive, molecular sieve process will be also illustrated. Finally, an example will be given for the conversion of the olefin components of an n-olefin plus n-paraffin rich product of the present separation process.

Prior to the specific examples, the cracked distillate feed employed and the zeolite adsorbents used will be described. The test methods and analytical techniques, i.e. the gas and liquid phase standard static adsorption tests, and raffinate analysis by capillary gas chromatography, will be discussed.

## Feeds, Test Methods and Analyses

The model compound mixtures employed as feeds in the adsorption tests were made up from pure laboratory chemicals representing the main types of compounds present in the feeds of the present separation process.

Preferred feed fractions examined in detail were FLEXICOKER distillates produced by cracking vacuum residua of mixed crudes of South American and Mideastern origin. Fluid-coker distillates similarly derived from Northwest American crude had similar molecular compositions. Both distillates are described in detail in the earlier referred Oswald et al. patent and patent application.

The zeolite adsorbents were calcined before use by heating at about 400 °C overnight. Thereafter, they were stored at 80 °C under nitrogen until used.

A low alumina (less than 200 ppm) microcrystalline silicalite was also employed.

The high alumina (about 5000 ppm) silicalite powder from Union Carbide Corporation was treated at room temperature at first with a an 18% aqueous hydrochloric acid solution overnight 3-4 times, until the supernatant liquid was no longer discolored. Thereafter, the silicalite was treated with a dilute aqueous sodium hydroxide solution of pH 9-10 overnight or with an ammonia gas. These treatments resulted in a significant reduction of its alumina content and the neutralization of acidic impurities. The silicalite resulting from this acid base treatment was calcined as usual.

A laboratory preparation of ZSM-5 sodium aluminosilicate derivative derived from the corresponding quaternary ammonium derivative was also used. The microcrystalline powder was also calcined and employed in some of the adsorption tests. Sodium ZSM-5, made via direct synthesis by Uetikon of Switzerland was also tested.

The model compound mixtures and FLEXICOKER distillate fractions employed as feeds in the adsorption tests and their respective raffinates, i.e. non-adsorbed products of these tests, were analyzed by capillary gas chromatography (GC). High resolution GC analyses were carried out using a 50 m fused silica

column coated with non-polar methylsilicones. Thus GC retention times were approximately proportional to the boiling points of the components.

In general, the adsorption tests were carried out with accurately weighed amounts of zeolite and hydrocarbon feed. After contacting the zeolite and the feed, the composition of the rejected hydrocarbon raffinate was analyzed and compared with that of the feed.

Static adsorption tests were carried out in both the gas and the liquid phase, using model compound mixtures and FLEXICOKER fractions of varying carbon ranges. In the gas phase test about 1 g zeolite and 0.2 g hydrocarbon feed were placed into a small closed vial and kept there for four hours at 40°C. With the low, $C_5$ and $C_6$, fractions used in these tests, this was sufficient to reach adsorption and gas liquid equilibria. Thereafter, the gas phase of the test mixture representing the raffinate and the feed were both sampled for G.C. analyses.

In the liquid phase tests, the hydrocarbon feed was diluted with a non adsorbing bulky compound, heptamethylnonane or decalin. In the majority of liquid phase tests 2 g of a 10/90 mixture of hydrocarbon and diluent was used per g zeolite. This proportion of the liquids to solids gave rise to a substantial supernatant liquid phase of the test mixture which could be easily sampled. The test mixture was heated for several hours with occasional shaking to reach equilibrium and then allowed to cool. The supermatant liquid was then analyzed by GC and its composition was compared with that of the feed.

Some of the liquid phase tests were carried out with about 1g of a 30/70 mixture of the feed plus diluent per g zeolite. These mixtures exhibited no significant supernatant liquid phase after settling. The sealed mixtures were heated to reach equilibria as above. Due to the absence of a separate liquid phase, the equilibria were more rapidly established in these tests. After equilibriation, the test mixtures were diluted with about 1g of isooctane, 2,2,4-trimethylpentane, or other suitable bulky compound and thoroughly mixed. After settling, the clear supernatant liquid phase was analyzed by GC as usual.

It is noted that the absence of zeolite microcrystals from the liquids injected to the gas chromatograph is critical for correct compositional analyses of the raffinates. These crystals, if present, are deposited in the high temperature (about 325°C) injection port of the chromatograph and act as cracking catalysts particularly for the 1-n-olefin components.

The FLEXICOKER distillate feeds exhibited complex gas chromatograms with overlapping GC peaks of some components, especially in case of the higher fractions. As a consequence the nominal GC percentages of some small components were dependent on the GC sample size.

The selectivities and capacities of zeolite adsorbents for the components of the test mixtures were estimated by the ratio of their respective concentrations in the raffinate. High ratios indicated selective adsorption while low ratios were signs of rejection by the zeolite.

## Example 1

### Preparation of Acid-Base Treated Silicalite

One liter of 18% by wt. hydrochloric acid, at room temperature, was added to 20g silicalite (S115 from Union Carbide Corporation) with stirring. The liquid-solid suspension was allowed to settle overnight to separate into two phases. The supernatant liquid phase, which had become discolored, was decanted and 1 liter of fresh 18% HCl was added to the solid with stirring and again allowed to settle overnight. This acid washing procedure was repeated a third time, after which the liquid phase remained colorless. The silicalite was collected and washed repeatedly with deionized water until the wash water gave a neutral reaction to litmus. The silicalite was then washed in 1 liter of a mildly basic solution which was prepared by adding 0.3g NaOH to 1 liter of a mildly basic solution which was prepared by adding 0.3g NaOH to 1 liter water, again allowed to settle, and finally rinsed once with deionized water. The silicalite was dried in air overnight at 90°-95°C and calcined at 400°C for a minimum of 4 hours at which time it was ready for use.

An alternate method to neutralize the acid sites in the silicalite was to dry it at 90°-95°C and calcined at 400°C for a minimum of 4 hours at which time it was ready for use.

An alternate method to neutralize the residual acid sites in the silicalite was to dry it at 90°-95°C overnight following the acid washing and water rinsing as described above. The silicalite was then placed in an evacuated vessel which had been filled with 1% - 2% anhydrous ammonia, the percentage being based on the weight of silicalite to be so treated. The silicalite was spread out in the evacuated vessel to maximize the surface area in contact with the gaseous ammonia, and contact time was 1 hour. The silicalite was collected and it was ready for use.

Example 2

Adsorption of n-Pentenes and n-Pentane From $C_5$ FLEXICOKER Naphtha

A sealed mixture of about 0.2g $C_5$ FLEXICOKER feed fraction and 1g acid base treated silicalite of Example 1 was heated at 40°C for four hours. Subsequent gas phase analyses of the feed and the raffinate (Raf.) by GC indicated the percentage composition listed in Table I. (The main components are listed in the order of their retention times.)

The data of Table I show that the concentrations of 1-n-pentene, cis-and trans-pentenes and n-pentane are significantly reduced in the raffinate, indicating their selective adsorption. In contrast the concentrations of methyl branched butenes and isopentane (2-methylbutane) and increasing in the raffinate, indicating their rejection.

Example 3

Adsorption of n-Hexenes and n-Hexane From a Mixture of $C_6$ Model Compounds

About 0.2g of a mixture of similar amounts of n-hexenes, n-hexane and 2-methylpentane and 1 g acid/base washed silicalite of Example 1 were contacted at 40°C for four hours and analyzed by the gas phase method using GC. The composition of the resulting raffinate and the starting feed are compared in Table II.

The data of Table II indicate that with the exception of cis-2-hexene, all the n-hexenes plus the n-hexane the mixture were adsorbed. trans-2-Hexene was preferentially adsorbed over cis-2-hexene.

A rejection of 2-methyl branched 1-pentene was indicated.

Calculations have shown that the approximate capacity of the silicalite for 2-hexenes and 1-hexene was about 4.7 wt.% and 1.9 wt.%, respectively.

Table I

| Adsorption of $C_5$ FLEXICOKER Fraction by Acid/Base Treated Silicalite | | | |
|---|---|---|---|
| Name of Component | Component | | |
| | Conc., GC % | | Ratio, Feed to Raf. |
| | Feed | Raf. | |
| 3-Methyl-1-butene | 4.5 | 9.3 | 0.48 |
| Isopentane | 13.4 | 21.8 | 0.61 |
| 1-n-Pentene | 38.1 | 22.6 | 1.69 |
| 2-Methyl-1-butene | 18.4 | 24.2 | 0.76 |
| n-Pentane | 12.5 | 6.7 | 1.86 |
| Isoprene | 3.1 | 4.5 | 0.69 |
| trans-2-Pentene | 4.9 | 3.1 | 1.58 |
| cis-2-Pentene | 1.8 | 1.3 | 1.38 |
| 2-Methyl-2-butene | 0.8 | 3.2 | 0.25 |

Table II

| Adsorption of Model Mixture of $C_6$ Hydrocarbons by Acid/Base Treated Silicalite | | | |
|---|---|---|---|
| Name of Component | Component | | |
| | Conc., GC % | | Ratio, Feed to Raf. |
| | Feed | Raf. | |
| 2-Methyl-1-pentene | 18.5 | 33.0 | 0.56 |
| 1-n-Hexene | 17.0 | 13.8 | 1.23 |
| n-Hexane | 18.0 | 12.6 | 1.43 |
| trans-2-Hexene | 22.7 | 14.7 | 1.55 |
| cis-2-Hexene | 18.8 | 17.0 | 1.11 |

## Example 4

### Adsorption of n-Hexenes and n-Hexane From $C_6$ FLEXICOKER Naphtha

A gas phase adsorption test was carried out with a mixture of about 0.2g broad $C_6$ FK feed fraction and 1g acid/base treated silicalite of Example 1 for four hours at 40°C. Subsequent GC analyses of the feed and the raffinate obtained are shown in Table III.

The data of the table show that, among the $C_5$ components, cyclopentene and cyclopentane are not adsorbed. In contrast, cis and trans-piperylene appear to get adsorbed among the numerous $C_6$ hydrocarbons, the n-hexenes exhibited the positive adsorption behavior observed in the $C_6$ model mixture. The methyl branched pentenes did not get appreciably adsorbed except the 3-methyl branched 2-pentene. Among the $C_6$ paraffins present, only n-hexane was adsorbed.

Calculations indicated that the approximate capacity of the silicalite for the main two components, 1-n-hexene and n-hexane was 3.5% and 1.8%, respectively.

## Table III

**Adsorption of $C_6$ FLEXICOKER Fraction by Acid/Base Treated Silicalite**

| Name of Component | Component Conc., GC% Feed | Component Conc., GC% Raf. | Ratio, Feed to Raf. |
|---|---|---|---|
| n-Pentane | 2.2 | 0.3 | 7.3 |
| trans-2-Pentene | 1.7 | 0.7 | 2.4 |
| cis-2-Pentene | 1.1 | 0.6 | 1.8 |
| 2-Methyl-2-butene | 3.8 | 7.3 | 0.5 |
| trans-Piperylene | 1.1 | 0.2 | 5.5 |
| cis-Piperylene | 0.8 | 0.2 | 4.0 |
| Cyclopentene | 4.4 | 7.8 | 0.6 |
| Cyclopentane | 3.4 | 6.4 | 0.6 |
| 4-Methyl-1-pentene | 5.8 | 10.4 | 0.6 |
| 2-Methylpentane | 4.5 | 7.2 | 0.6 |
| 4-Methyl-2-pentene | 2.3 | 3.8 | 0.6 |
| 3-Methylpentane | 1.8 | 3.1 | 0.6 |
| 2-Methyl-1-pentene | 3.6 | 5.7 | 0.6[a] |
| 1-n-Hexene | 20.3 | 5.3 | 3.8[a] |
| n-Hexane | 10.1 | 2.2 | 4.6 |
| 3-Hexenes | 1.3 | 0.5 | 2.6 |
| trans-2-Hexene | 1.0 | 0.7 | 4.0[a] |
| 2-Methyl-2-pentene | 2.1 | 3.4 | 0.6 |
| 3-Methyl-2-pentene | 1.5 | 0.5 | 3.0 |
| cis-2-Hexene | 1.2 | 1.8 | 0.7 |
| Methylcyclopentane | 3.5 | 4.7 | 0.7 |
| Benzene | 6.1 | 7.6 | 0.8[a] |

[a] GC peak overlap

Example 5

Adsorption of 1-n-Octene and n-Octane From a Mixture of $C_8$ Model Compounds

About 2.4 g of 10/90 mixture of $C_8$ model compounds and heptamethylnonane diluent was added to two 1 g acid/base washed samples of Example 1 to prepare two test mixtures. These mixtures were then heated at 110°C for 2 hours and at 150°C for 4 hours. The supernatant liquids of these compositions were then analyzed by GC. The GC compositions of the two $C_8$ raffinate compositions are compared to that of the feed in Table IV.

The data of the table indicate that 1-n-octene and n-octane are selectively adsorbed from a mixture containing $C_7$ and $C_8$ aromatic hydrocarbons at both test temperatures. There is only minor isomerization of 1-octene to internal i.e. 2-, 3- and 4-octenes. The aromatic sulfur compounds present, 2-methylthiophene and 2,5-dimethylthiophene, are highly selectively adsorbed. The selectivity as indicated by the ratio of raffinate to feed is particularly high for the less bulky methylthiophene.

**Table IV**

**Adsorption of Model Mixture of $C_8$ Hydrocarbons by Acid/Base Treated Silicalite**

| Name of Component | Concentration, GC % | | | Ratio of Feed to Raffinate | |
|---|---|---|---|---|---|
| | Feed | Raffinate 110°C | Raffinate 150°C | 110°C | 150°C |
| Toluene | 12.7 | 15.3 | 18.1 | 0.8 | 0.7 |
| 2-Methylthiophene | 1.3 | 0.4 | 0.1 | 3.4 | 10.3 |
| 1-n-Octene | 20.2 | 10.8 | 9.7 | 1.9 | 2.1 |
| 4-Octene | 0.1 | 0.1 | 0.1 | ~1.0 | ~1.0 |
| 3-Octene | 0.2 | 0.4 | 0.4 | ~0.5 | ~0.5 |
| n-Octane | 28.7 | 10.6 | 9.4 | 2.7 | 3.0 |
| trans-2-Octene | 0.3 | 0.7 | 0.7 | ~0.4 | ~0.4 |
| cis-2-Octene | 0.2 | 0.9 | 0.6 | ~0.2 | ~0.3 |
| Ethylbenzene | 15.7 | 18.8 | 21.9 | 0.8 | 0.7 |
| 2,5-Dimethylthiophene | 1.5 | 0.7 | 0.3 | 2.2 | 7.7 |
| m- & p-Xylenes | 26.7 | 34.0 | 38.9 | 0.8 | 0.7 |

## Example 6

### Adsorption of 1-n-Octene and n-Octane from $C_8$ FLEXICOKER Naphtha

A liquid phase adsorption test was carried out with about 2.2 ml of a 10/90 mixture of a $C_8$ Flexicoker distillate and heptamethylnonane and 1 g acid/base washed silicalite of Example 1. The mixture was heated at 110 °C for 2 hours. The supernatant raffinate was analyzed by GC and its composition compared with that of the feed. The results are shown in Table V.

The data indicate 1-n-octene and n-octane are selectively adsorbed. It appears that some of the 1-n-octene was isomerized to internal octenes. 4-Methyl-1-heptene is apparently not adsorbed appreciably because of the branching in the middle of the chain. The dimethyl branched aliphatic hydrocarbons are completely rejected. Similarly, the aromatic hydrocarbons toluene and ethylbenzene, appear to be rejected.

Table V

Adsorption of $C_8$ FLEXICOKER Fraction by Acid/Base Washed Silicalite at 110° in 2 Hours

| Name of Component | Component Conc. GC % Feed | Component Conc. GC % Raf. | Ratio, Feed to Raf. |
|---|---|---|---|
| Toluene | 7.2 | 11.8 | 0.6 |
| 4-Methyl-1-heptene | 2.8 | 4.4 | 0.6 - |
| 2-Methylheptane | 4.3 | 2.0 | 2.1 - |
| cis-1,3-Dimethylcyclohexane | 4.5 | 6.5 | 0.7 - |
| 2-Methyl-1-heptene a | 6.1 | 1.8 | 3.4 |
| 1-n-Octene a | 17.6 | 7.2 | 2.5 |
| 4-Octene b | 2.7 | 5.4 | 0.5 |
| 3-Octene b | 1.9 | 2.2 | 0.8 |
| n-Octane b | 13.2 | 9.5 | 1.4 |
| trans-2-Octene b | 2.4 | 2.0 | 1.2 |
| Dimethylhexathiene c | 2.6 | 5.0 | 0.5 |
| cis-2-Octene | 1.3 | 0.8 | 1.7 |
| Dimethylcyclohexene c | 1.4 | 2.9 | 0.5 |
| Ethylbenzene | 0.4 | 0.7 | 0.5 |

a Partial isomerization may have occurred
b Value includes associated GC peaks
c Tentative identification

## Example 7

### Adsorption of 1-n-Decene and n-Decane from Their Mixture With Trimethylbenzenes

About 1.6 g of A 15% solution of 1-n-decene, n-decane, 1,2,4- and 1,2,3-trimethylbenzenes in heptamethylnonane was added to about 1 g acid/base washed silicalite of Example 1. The mixture was heated at 150 ° C for 3 hours. A subsequent GC analysis of the supernatant liquid raffinate showed a major change in the composition of the model compounds as shown by Table VI.

The data show a highly selective adsorption of both 1-n-decene and n-decane. A minor isomerization of 1-n-decene is indicated by the readily distinguished GC peaks of 4-decene and trans-2-decene. Based on the decreased concentrations of 1-n-decene and n-decane, the approximate capacity of the silicalite for these compounds together is 10.1%.

Table VI

Adsorption of a Mixture of $C_9$ and $C_{10}$ Model Compounds by an Acid/Base Washed Silicalite at 150°C for 3 hours

| Name of Component | Comp., GC % Feed | Comp., GC % Raf. | Ratio Feed to Raf. |
|---|---|---|---|
| 1.2.4- Trimethylbenzene | 29.7 | 50.2 | 0.6 |
| 1-Decene | 22.1 | 0.9 | 24.5 |
| 4-Decene | | 0.1 | |
| n-Decane | 22.0 | 2.8 | 7.9 |
| trans-2-Decene | | 0.1 | |
| 1,2,3- Trimethylbenzene | 25.4 | 44.5 | 0.6 |

Example 8

Adsorption of Isomeric n-Decenes from a Mixture of Model Compounds

About 2.7 g of a 1/1 mixture of $C_{10}$ model compounds and heptamethylnonane was added to a 1 g acid/base washed silicalite of Example 1. The resulting test mixture was then heated at 150 °C for 2 hours. The supernatant raffinate liquid was then analyzed by GC and its composition compared with that of the feed mixture. The results are shown by Table VII.

The data show that all the n-decenes are adsorbed in contrast to the trimethylbenzene components. However, it is not possible to determine the relative selectivities of their adsorption because of their concurrent isomerization. At a concentration comparable to those of n-decenes, 2,5-dimethylthiophene is adsorbed to a lesser degree although it is clearly not rejected like the trimethylbenzenes.

Table VII

Adsorption of n-Decenes by an Acid-Base Washed Silicalite at 150°C in 2 Hours

| Name of Component | Comp., GC% Feed | Comp., GC% Raf. | Ratio, Feed to Raf. |
|---|---|---|---|
| 2,5-Dimethylthiophene | 10.7 | 11.8 | 0.9 |
| 1,2,4-Trimethylbenzene | 18.0 | 29.4 | 0.6 |
| 1-n-Decene | 11.3 | 5.7 | 2.0 |
| 4-Decene | 12.7 | 7.0 | 1.8 |
| 3-Decene | 3.0 | 2.4 | 1.3 |
| trans-2-Decene cis-2-Decene[a] | 12.0 | 8.5 | 1.4 |
| 1,2,3-Trimethylbenzene[a] | 26.6 | 33.5 | - |

[a] The two GC peaks are not completely resolved.

Example 9

Adsorption of 1-n-Decene and n-Decane from a Mixture of $C_{10}$ Model Compounds by Various Silicalites

About 1g of each of an about 10/90 mixture of $C_{10}$ model compounds and heptamethylnonane was added to 1 g samples of various silicalites of Example 1. The resulting mixtures were heated at 150 °C for 2 hours and the raffinates analyzed by GC. The data are shown by Table VIII.

A comparison of the feed composition with those of the raffinates indicate that all the silicalites tested selectively adsorb 1-n-decene and n-decane. The untreated and acid/base washed silicalites were especially effective in adsorbing 1-n-decene. It is indicated by the low concentration of cis-2-decene in the raffinate, that no significant isomerization of 1-n-decene occurred. The concentration of indene in the raffinate of the mixture with the untreated silicalite is sharply reduced. This is probably due to acid catalysed dimerization, oligomerization. The reduced concentrations of 2,5-dimethylthiophene indicate its selective adsorption by all the zeolites. It is noted that a selective 2,5- dimethylthiophene adsorption was not observed in the previous example where large amounts of 2,5-dimethylthiophene were employed. The bulkier sulfur compound, benzothiophene, was not adsorbed in either the present or the previous example.

**Table VIII**

**Adsorption of $C_{10}$ Model Compounds by Various Silicalites**

| Name of Component | Feed | Composition, GC % Silicalite at 120 °C, 2 hrs: As is | Acid/Base | Silica Binder | Pure |
|---|---|---|---|---|---|
| 2,5-Dimethylthiophene | 1.6 | | 0.2 | 0.4 | 0.1 |
| 1,3,5-Trimethylbenzene | 10.0 | 30.8 | 21.5 | 17.0 | 20.2 |
| 1,2,4-Trimethylbenzene | 9.9 | 26.0 | 18.7 | 16.5 | 19.9 |
| 1-n-Decene | 25.7 | | 0.4 | 12.4 | 8.2 |
| n-Decane | 27.9 | 12.1 | 7.9 | 18.3 | 7.7 |
| cis-2-Decene | 0.3 | 0.3 | 1.2 | 0.2 | 0.2 |
| Indane | 0.8 | 1.9 | 1.2 | 1.3 | 1.5 |
| Indene | 11.4 | 2.4 | 15.3 | 16.1 | 19.0 |
| Naphthalene | 8.0 | 22.0 | 16.9 | 13.8 | 18.7 |
| Benzothiophene | 2.0 | 3.6 | 3.3 | 3.2 | 4.2[a] |

Example 10

Adsorption of 1-n-Decene and n-Decane from $C_{10}$ FLEXICOKER Naphtha by Acid/Base Washed Silicalite

About 1.9 g of a 10/90 mixture of a sharp $C_{10}$ Flexicoker naphtha fraction, of bp. 165 to 171 °C, was added to 1 g acid/base washed silicalite of Example 1. The resulting test mixture was heated for 4 hours at 150 °C. The feed and the supernatant raffinate liquid were then analyzed by GC. The gas chromatogram of the feed is shown by Figure 1. The compositions of the feed and the raffinate are compared in Table IX.

The data of the table show that the concentration of the main 1-n-decene and n-decane components is drastically reduced on treatment with silicalite. This is apparently due to the selective adsorption of these components. As a consequence of the selective adsorption of the linear aliphatic compounds the concentration of the aromatic components is generally increased.

**Table IX**

**Adsorption of 1-n-Decene and n-Decane From a Sharp $C_{10}$ Fraction of FLEXICOKER Naphtha by Acid/Base Washed Silicalite**

| Name of Compound | Concentration, GC % Feed | Concentration, GC % Raf. | Ratio, Feed to Raf. |
|---|---|---|---|
| 1-Methyl-3-ethylbenzene | 0.69 | 1.30 | 0.53 |
| 1-Methyl-4-ethylbenzene | 0.79 | 0.82 | 0.96 |
| 1,3,5- Trimethylbenzene | 1.90 | 3.71 | 0.51 |
| 1-Methyl-2-ethylbenzene | 2.32 | 4.15 | 0.56 |
| 1,2,4-Trimethybenzene | 12.98 | 23.41 | 0.55 |
| 1-n-Decene | 23.17 | 0.92 | 25.18 |
| n-Decane | 14.86 | 3.57 | 4.16 |
| trans-2-Decene | 3.14 | 2.73 | 1.15 |
| 1,2,3- Trimethylbenzene | 7.41 | 12.82 | 0.58 |
| Indane | 2.96 | 5.52 | 0.54 |
| Indene | 0.85 | 0.90 | 0.94 |

Example 11

Adsorption-Desorption of n-Decenes and n-Decane from $C_{10}$ FLEXICOKER Naphtha Fraction in a Pulse Test

About 4.51 g acid base washed silicalite of Example 1, having a bed volume of 5 ml, was packed into a 1 ft. stainless steel column of a diameter of 1/4 in. The resulting adsorbent bed was pre-wetted with n-hexane desorbent at a liquid hourly space velocity [LHSV] of 1.3, i.e. 6.5 ml per hour. After the desired operating conditions, i.e. 140 °C and 270 psi, were lined out, a 0.25 ml $C_{10}$ Flexicoker feed pulse, of the composition shown in the previous example, was injected into the column. After the injection, the flow of n-hexane desorbent was resumed and the feed components were eluted. Effluent samples were collected

periodically and analyzed by GC. Their composition was plotted against the volume of the eluted desorbent as shown by Figure 2.

Figure 2 indicates that the aromatic (and branched aliphatic) hydrocarbon components of the feed were eluted at first, due to their simple displacement by the desorbent from the voids of the silicalite column. This early fraction is the raffinate. Elution of the n-decane and 1-n-decene component rich extract occurred distinctly later. These components of the extract clearly coeluted, due their concurrent displacement from the channels of the silicalite by the desorbent. The 1-n-decene was slightly more difficult to displace than the n-decane. As it is shown by the Figure an inbetween-cut of the eluent was taken between the raffinate and the extract.

Both the raffinate and the extract were analyzed by GC in some detail. The analysis of the raffinate showed that essentially all the aromatic components of the feed were recovered. The results of the GC analysis of the extract are illustrated by Figure 3.

Figure 3 shows that besides n-decane and 1-n-decene, signficant amounts of internal linear decenes (5-,4-and 2-decenes) were recovered in the extract. The latter compounds were in part already present in the feed. Additional amounts were formed via 1-n-decene isomerization during the adsorption desorption process.

The chromatogram of the figure also indicated the presence in the extract of small amounts, about 0.5%, of 2-methyl-1-nonene. Some adsorption by the silicalite of this compound and the related 2-methylnonane was indicated by the model compound experiment described in Example 7.

Example 12

Preparation of Synthetic Polyalkene Lubricant from $_9$ to $C_{13}$ a n-Olefins Plus n-Paraffins Mixture

A mixture of $C_9$ to $C_{13}$ n-olefins and n-paraffins is separated from the corresponding broad Flexicoker distillate via a molecular adsorption of the type described in the previous examples. This mixture, containing $C_9$ to $C_{13}$ 1-n-olefins as the main reactive components, is then oligomerized using a boron trifluoride complex of an alcohol, i.e. neopentyl alcohol. The oligomerization is carried out in the liquid phase at temperatures and pressures sufficient to convert not only the terminal 1-n-olefin components but most of the internal n-olefins as well to polyolefin oligomers containing olefin trimers as the main components.

The resulting polyolefin - n-paraffin mixture is then hydrogenated in the presence of a sulfur insensitive transition metal sulfide catalyst. This provides an isoparaffin plus n-paraffin mixture which is then separated by distillation. The n-paraffins and the isoparaffin dimers are distilled. The residual isoparaffin product comprising mainly trimers and tetramers is a desirable synthetic lubricant. The n-paraffin distillate is converted via known chlorination - dehydrochlorination reactions to linear olefin intermediates of biodegradable alkylbenzene sulfonate manufacture. The isoparaffin dimers are useful as solvents of low volatility.

Due to the presence of significant amounts of linear internal olefins and minor amounts of monomethyl branched olefins in the feed, the polyolefin lubricant products are distinct over products of the prior art. The presence of comparable amounts of even and uneven carbon number olefin reactants in the feed also distinguishes the products over the prior art poly-$\alpha$-olefin lubricants derived from ethylene via even numbered 1-n-olefins.

Example 13

Acid Washing of Silicolite

One liter of 18% hydrochloric acid was added to 20g silicaolite with stirring, at room ambient conditions, and the suspension was allowed to settle overnight. Next morning the supernatant liquid, which had become disclosed, was decanted and 1 liter of a fresh 18% HCl solution was again added to the silicalite with stirring and again allowed to settle overnight. This procedure was repeated a third time at which time the supernatant liquid remained colorless. The silicalite was separated from the liquid and washed in deionized water until the wash water gave a neutral reaction to litmus. The silicalite was then dried at 90°-95°C overnight and calcined at 100°C in air for 4 hours minimum. The silicalite was now ready for use.

Example 14

Base Washing of Silicalite

One liter of a mildly basic solution (0.3g NaOH/liter water) was added to 20g of silicalite with stirring at room ambient conditions and allowed to settle overnight. The next morning the supernatant liquid, which had remained colorless, was decanted and the silicalite was washed with deionized water until the wash water gave a neutral reaction to litmus. The silicalite was then dried and calcined, as described in Example 13. The silicalite was now ready for use.

Example 15

Isomerization Testing of Treated Silicalites

To test the effectiveness of the acid-base treatment, 0.2g of 1-hexene was added to a vial containing 1g treated silicalite, the vial was crimp sealed, and placed in an oven for 1 hour at 100°C. The vial was removed from the oven, cooled to room ambient, and tested by the headspace GC method. In this method the composition of the gaseous phase above the silicalite, which is in equilibrium with the hexene(s) adsorbed in the silicalite, is measured.

This isomerization test is a very sensitive one because of the five linear hexene isomers 1-hexane is the least stable one thermodynamically. The 100°C environment is used to accelerate the isomerization reaction which may be slow under room ambient conditions.

If no isomerization takes place the resulting chromatogram should display a single peak, that of 1-hexene. Conversely, if isomerization does occur, the resulting chromatogram should display a multiplicity of peaks, each peak representing a different hexene isomer. Figure 4 is a representation of the results of such a test. The left hand side of the figure shows that untreated silicalite isomerizes 1-hexene, as represented by the four peaks, one for each linear 2-hexene and 3-hexene isomers. The right hand side of the figure, on the other hand, shows a single peak, that of 1-hexene, indicating that the acid-base treatment of the silicalite was effective in suppressing 1-hexene isomerization.

A summary of these test results, is given in Table X, which indicates that untreated silicalite, which was included in these tests for comparison, as well as the acid washed silicalite converted all of the 1-hexene into 2-hexene and 3-hexene isomers. These hexene isomers were identified from their respective GC peaks. The base washed silicalite showed considerable reduction ion isomerization activity; 92°C if the 1-hexene remained intact.

Table X

| Summary of Isomerization Test Results on Silicalites | |
|---|---|
| Treatment | % 1-Hexene in Gas Phase |
| None (as received) | 0 |
| Acid Washed Only | 0 |
| Base Washed Only | 92 |
| Acid-Base Washed | 100 |

Under these test conditions, however, 8°C of the gas phase above the solid was identified as being 2-hexene and 3-hexene isomers. The acid-base washed silicalite, on the other hand, showed that 100% of the gas phase above the solid was 1-hexene, as evidenced by a single peak on the chromatogram. This was compared to the chromatogram of 1-hexene which had not been contacted by silicalite; they were found to be identical.

Using ammonia instead of sodium hydroxide was equally effective suppressing 1-hexene isomerization. This is illustrated in Figure 2 which shows the test results of a silicalite sample which had been acid washed as described in Example 2 and treated with ammonia as described in Example 1. The test results show that no isomers of 1-hexene were found as evidenced by a single peak in the chromatogram.

A detailed analysis of the types and amounts of the various isomers formed when 1-hexene is contacted with untreated silicalite is given in Table XI. These data indicate that virtually all of the 1-hexene is transformed into 2-hexenes and 3-hexenes primarily and small amounts of varied $C_4$, $C_5$ and $C_6$

hydrocarbons.

## Table XI

### Effect of Silicalite on 1-hexene

| Species | 1-hexene (Reagent Grade) | 1-hexene Over Silicalite |
|---|---|---|
| butenes | | .027 |
| pentenes | | .042 |
| 4 methyl, 1 pentene/3 methyl, 1 pentane | | .026 |
| 2-methyl pentane | .026 | .076 |
| t-4-methyl, 2-pentene | | .028 |
| 3-methyl, pentane | .029 | .057 |
| 1-hexene | 99.61 | 2.617 |
| n-hexane | .096 | .093 |
| c & t 3-hexene | | 13.93 |
| t-2-hexene | | 53.77 |
| 2-methyl, 2-pentene | .236 | .025 |
| c-3-methyl, 2-pentene | | .027 |
| c-2-hexene | | 29.23 |
| t-3-methyl, 2-pentene | | .054 |

Example 16

Adsorption of Hexenes from a Mixture of $C_6$ Compounds

About 0.2g of a mixture of similar amounts of 1-hexene, t-2-hexene, c-2-hexene and 2-methyl-2-pentene was contacted with 1g of acid-base treated silicalite at 40 °C for 15 minutes and then analyzed by headspore GC. The results, given in Table XII, indicate that the linear hexenes are adsorbed preferentially to the branched olefin. This characteristic was observed for both the NaOH washed and $NH_3$ treated samples.

Table XII

Silicalite Selectivity for Linear vs. Branched Olefins

| Sample | * Selectivity ($\alpha_{ij}$) | | | |
|---|---|---|---|---|
| | 2 methyl, 2 pentene | t. 2 hexene | 1 hexene | c. 2 henene |
| Silicalite (Acid Washed, Base Washed) | .29 | 1.60 | 1.0 | .56 |
| Silicalite (Acid Washed, $NH_3$ Neutralized) | .27 | .93 | 1.0 | .71 |

* Head Space Technique, 40°C, Equimolar Adsorbed Phase

Example 17

Absorption of Hexene from an Olefin-Aromatic Mixture

About 0.2g of a mixture of similar amounts of 1-hexene and toluene was contacted with 1g of acid-base treated silicalite at 40° for 15 min. and then analyzed by headspore GC. The results, given in Table XIII show that both the NaOH washed and $NH_3$ treated samples adsorbed 1-hexene in preference to toluene.

Table XIII

| Silicalite Selectivity For Linear Olefins vs. Aromatics | | |
|---|---|---|
| Sample | * Selectivity (αij) | |
| | 1-hexene | toluene |
| Silicalite (Acid Washed, Base Washed) | 1.0 | 0.042 |
| Silicalite (Acid Washed, $NH_3$ Neutralized) | 1.0 | 0.13 |

* Head Space Technique, 40°C, Equimolor Adsorbed Phase

**Claims**

1. A process for the separation of $C_5$ to $C_{19}$ n-olefins and n-paraffins from a feed mixture comprising aliphatic and aromatic hydrocarbons, which process comprises:
   contacting the feed mixture with a zeolite adsorbent which has been treated with an acid and then with a base and which has a silica to alumina ratio of at least 20 and a pore diameter of from 3.5 to 7.0 x $10^{-10}$ m (3.5 to 7.0Å); said contacting being conducted under conditions sufficient to effect selective adsorption of n-olefins and n-paraffins by the zeolite; and
   desorbing adsorbed n-olefins and n-paraffins.

2. A process according to claim 1, wherein the zeolite adsorbent employed is selected from silicalite, ZSM-5 and other silicalites of said silica to alumina ratio, which have been treated with an acid and then with a base.

3. A process according to claim 1 or claim 2, wherein both adsorption and desorption are carried out in the temperature range of 10°C and 250°C.

4. A process according to any preceding claim, wherein said adsorption and desorption occur in the liquid phase.

5. A process according to any preceding claim, wherein the desorbent is a n-olefin or ammonia.

6. A zeolite composition comprising a zeolite adsorbent which has been treated with an acid and then with a base and has a silica to alumina ratio of at least 20 and a pore diameter of from 3.5 to 7.0 x $10^{-10}$ m (3.5 to 7.0Å).

7. A zeolite composition according to claim 6, wherein said acid is hydrochloric acid and said base an aqueous solution of sodium hydroxide.

8. A zeolite composition according to claim 6 or 7, wherein the zeolite adsorbent is selected from silicalite, ZSM-5, and other silicalites of said silica to alumina ratio.

9. A zeolite composition according to any of claims 6 to 8, wherein the zeolite in its pelletized form is acid treated and then base treated to remove residual acidity from the silica binder.

## Patentansprüche

1. Verfahren zur Abtrennung von $C_5$- bis $C_{19}$-n-Olefinen und -n-Paraffinen aus einer Einsatzmaterialmischung, die aliphatische und aromatische Kohlenwasserstoffe umfaßt, bei dem
   die Einsatzmaterialmischung mit einem Zeolithadsorbens kontaktiert wird, das mit einer Säure und dann mit einer Base behandelt worden ist und ein Siliciumdioxid-zu-Aluminiumoxid-Verhältnis von mindestens 20 und einen Porendurchmesser von 3,5 bis 7,0 x $10^{-10}$ m (3,5 bis 7,0 Å) aufweist, wobei das Kontaktieren unter Bedingungen durchgeführt wird, die ausreichend sind, um eine selektive Adsorption von n-Olefinen und n-Paraffinen durch den Zeolith zu erreichen, und
   die adsorbierten n-Olefine und n-Paraffine desorbiert werden.

2. Verfahren nach Anspruch 1, bei dem das verwendete Zeolithadsorbens ausgewählt ist aus Silikalit, ZSM-5 und anderen Silikaliten mit dem genannten Siliciumdioxid-zu-Aluminiumoxid-Verhältnis, welche mit einer Säure und dann mit einer Base behandelt worden sind.

3. Verfahren nach Anspruch 1 oder Anspruch 2, bei dem sowohl Adsorption als auch Desorption im Temperaturbereich von 10 °C bis 250 °C durchgeführt werden.

4. Verfahren nach einem der vorhergehenden Ansprüche, bei dem die Adsorption und Desorption in der flüssigen Phase stattfinden.

5. Verfahren nach einem der vorhergehenden Ansprüche, bei dem das Desorbens ein n-Olefin oder Ammoniak ist.

6. Zeolithzusammensetzung, die ein Zeolithadsorbens umfaßt, das mit einer Säure und dann mit einer Base behandelt worden ist und ein Siliciumdioxid-zu-Aluminiumoxid-Verhältnis von mindestens 20 und einen Porendurchmesser von 3,5 bis 7,0 x $10^{-10}$ m (3,5 bis 7,0 Å) aufweist.

7. Zeolithzusammensetzung nach Anspruch 6, bei der die Säure Salzsäure und die Base eine wäßrige Lösung von Natriumhydroxid ist.

8. Zeolithzusammensetzung nach Anspruch 6 oder 7, bei der das Zeolithadsorbens ausgewählt ist aus Silikalit, ZSM-5 und anderen Silikaliten mit dem genannten Siliciumdioxid-zu-Aluminiumoxid-Verhältnis.

9. Zeolithzusammensetzung nach einem der Ansprüche 6 bis 8, bei dem der Zeolith in seiner pelletierten Form mit Säure behandelt wird und dann mit Base behandelt wird, um die restliche Acidität aus dem Siliciumdioxid-Bindemittel zu entfernen.

## Revendications

1. Procédé de séparation de n-oléfines et de n-paraffines en $C_5$ à $C_{19}$ d'un mélange de charge comprenant des hydrocarbures aliphatiques et aromatiques, ce procédé comprenant :
   la mise en contact du mélange de charge avec un absorbant zéolithique ayant été traité avec un acide, puis avec une base, et possédant un rapport silice/alumine d'au moins 20 et un diamètre de pores de 3,5 à 7,0 x $10^{-10}$ m (3,5 à 7,0 Å); ladite mise en contact étant réalisée dans des conditions suffisantes pour que s'effectue l'adsorption sélective des n-oléfines et des n-paraffines par la zéolithe; et
   la désorption des n-oléfines et des n-paraffines adsorbées.

2. Procédé selon la revendication 1, dans lequel l'adsorbant zéolithique employé est choisi parmi la silicalite, la ZSM-5 et d'autres silicalites possédant ledit rapport silice/alumine, ayant été traitées avec un acide, puis avec une base.

3. Procédé selon la revendication 1 ou 2, dans lequel l'adsorption et la désorption sont toutes deux réalisées dans une gamme de températures de 10 °C à 250 °C.

4. Procédé selon l'une quelconque des revendications précédentes, dans lequel ladite adsorption et ladite désorption ont lieu en phase liquide.

5. Procédé selon l'une quelconque des revendications précédentes, dans lequel le désorbant est une n-oléfine ou de l'ammoniac.

6. Composition zéolithique comprenant un adsorbant zéolithique ayant été traité avec un acide, puis avec une base, et possédant un rapport silice/alumine d'au moins 20 et un diamètre de pores de 3,5 à 7,0 x $10^{-10}$ m (3,5 à 7,0 Å).

7. Composition zéolithique selon la revendication 6, dans laquelle ledit acide est l'acide chlorhydrique et ladite base une solution aqueuse d'hydroxyde de sodium.

8. Composition zéolithique selon la revendication 6 ou 7, dans laquelle l'adsorbant zéolithique est choisi parmi la silicalite, la ZSM-5 et d'autres silicalites possédant ledit rapport silice/alumine.

9. Composition zéolithique selon l'une quelconque des revendications 6 à 8, dans laquelle la zéolithe sous sa forme pastillée est traitée avec un acide, puis traitée avec une base, pour éliminer l'acidité résiduelle du liant silice.

Figure 1
CAPILLARY GAS CHROMATOGRAM OF A C10 FLEXICOKER DISTILLATE FEED

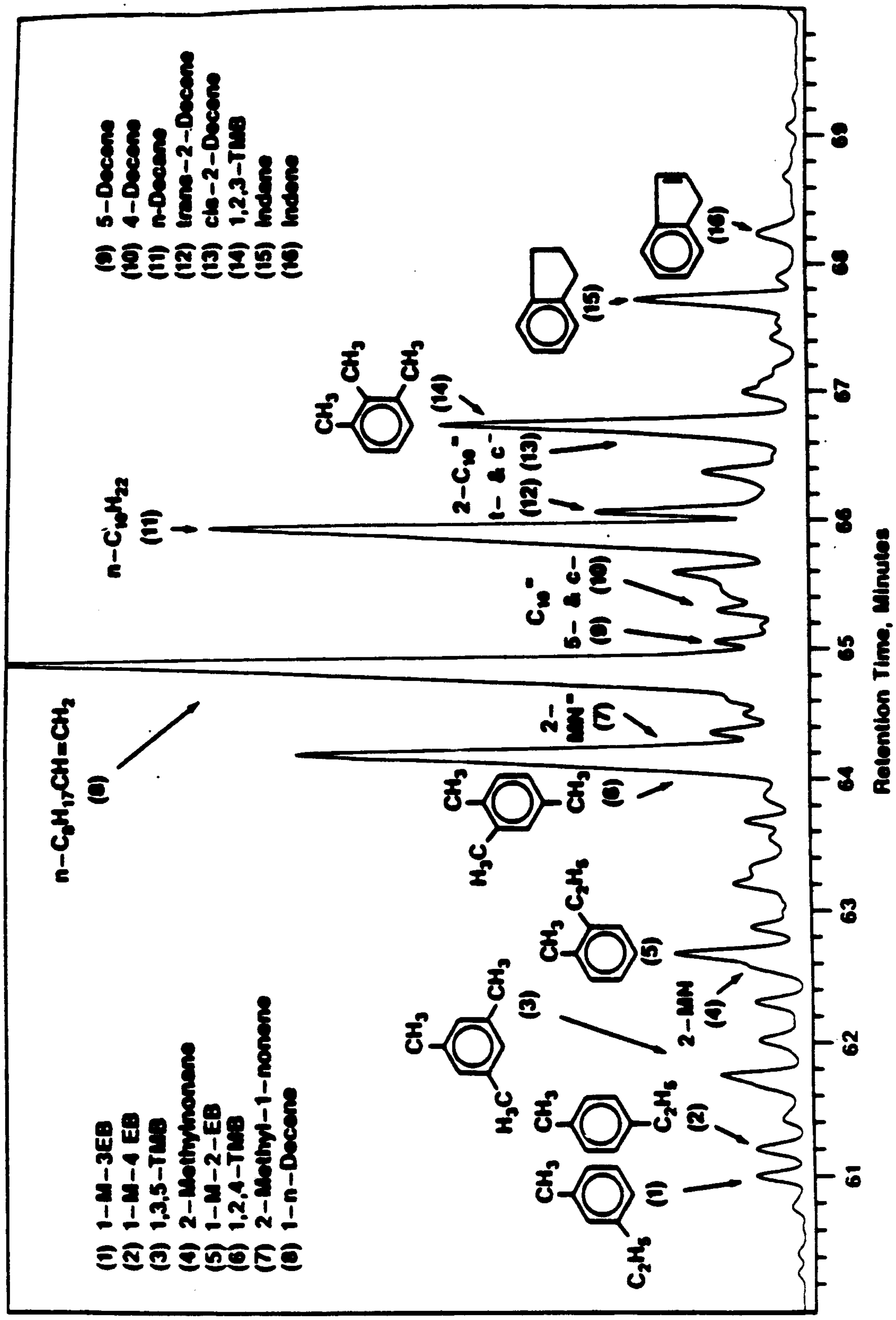

Figure 2

SILICALITE SEPARATION OF 1-n-DECENE AND n-DECANE FROM AROMATIC COMPONENTS OF FLEXICOKER DISTILLATE IN PULSE TEST

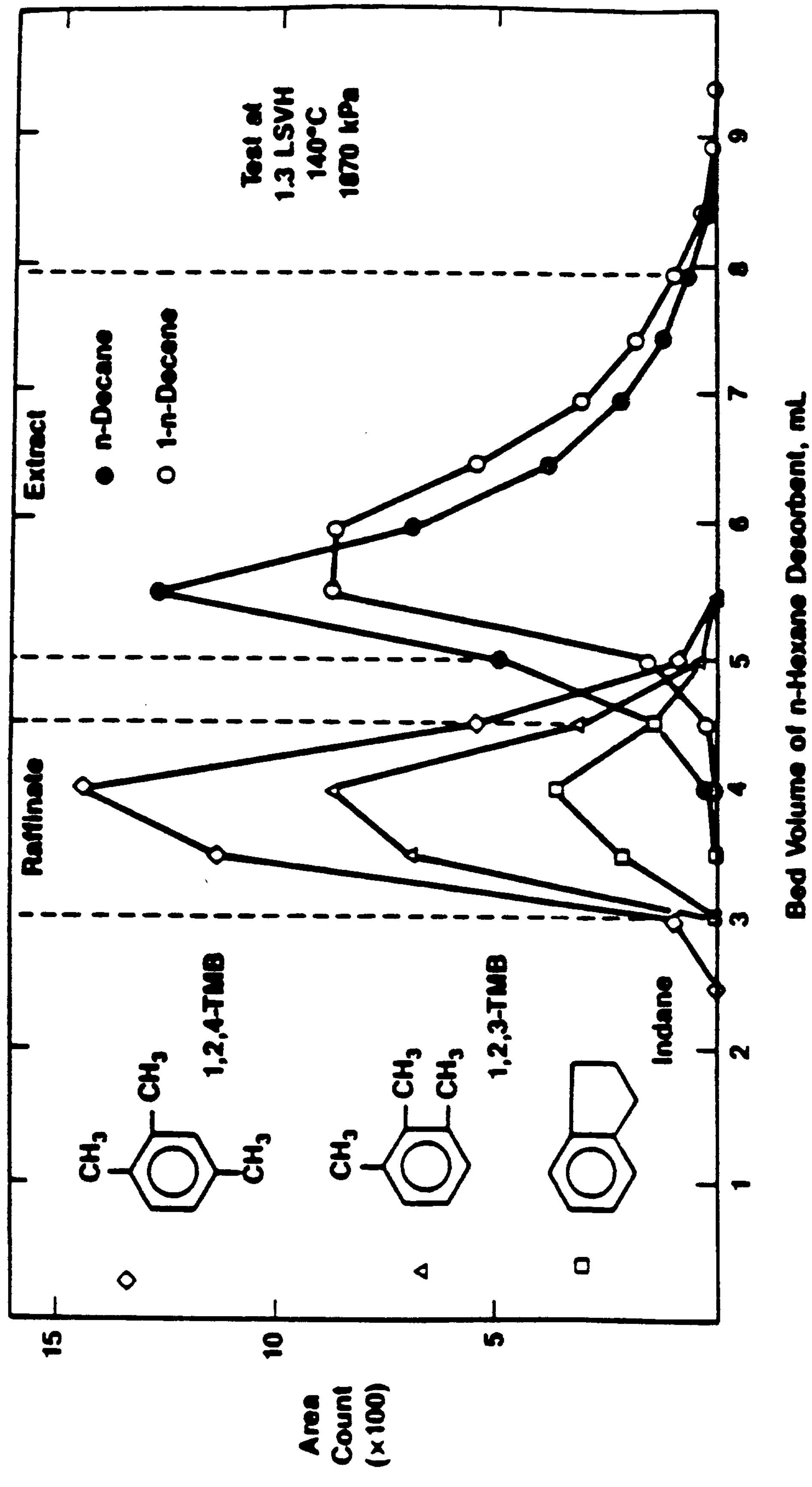

Figure 3

CAPILLARY GAS CHROMATOGRAM OF AN EXTRACT FROM A $C_{10}$ FLEXICOKER DISTILLATE

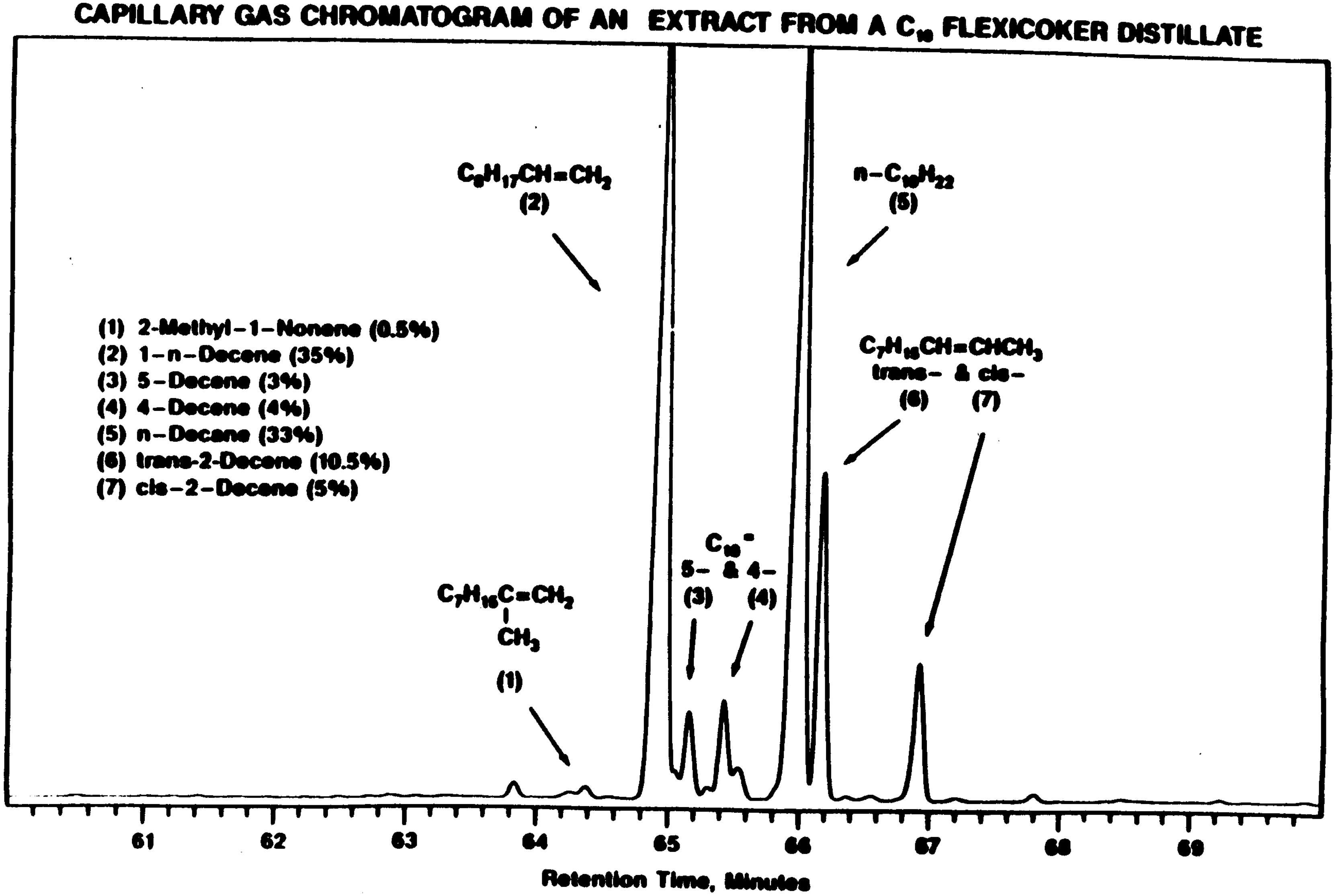

Fig 4

1 Hexene Isomerization Tests

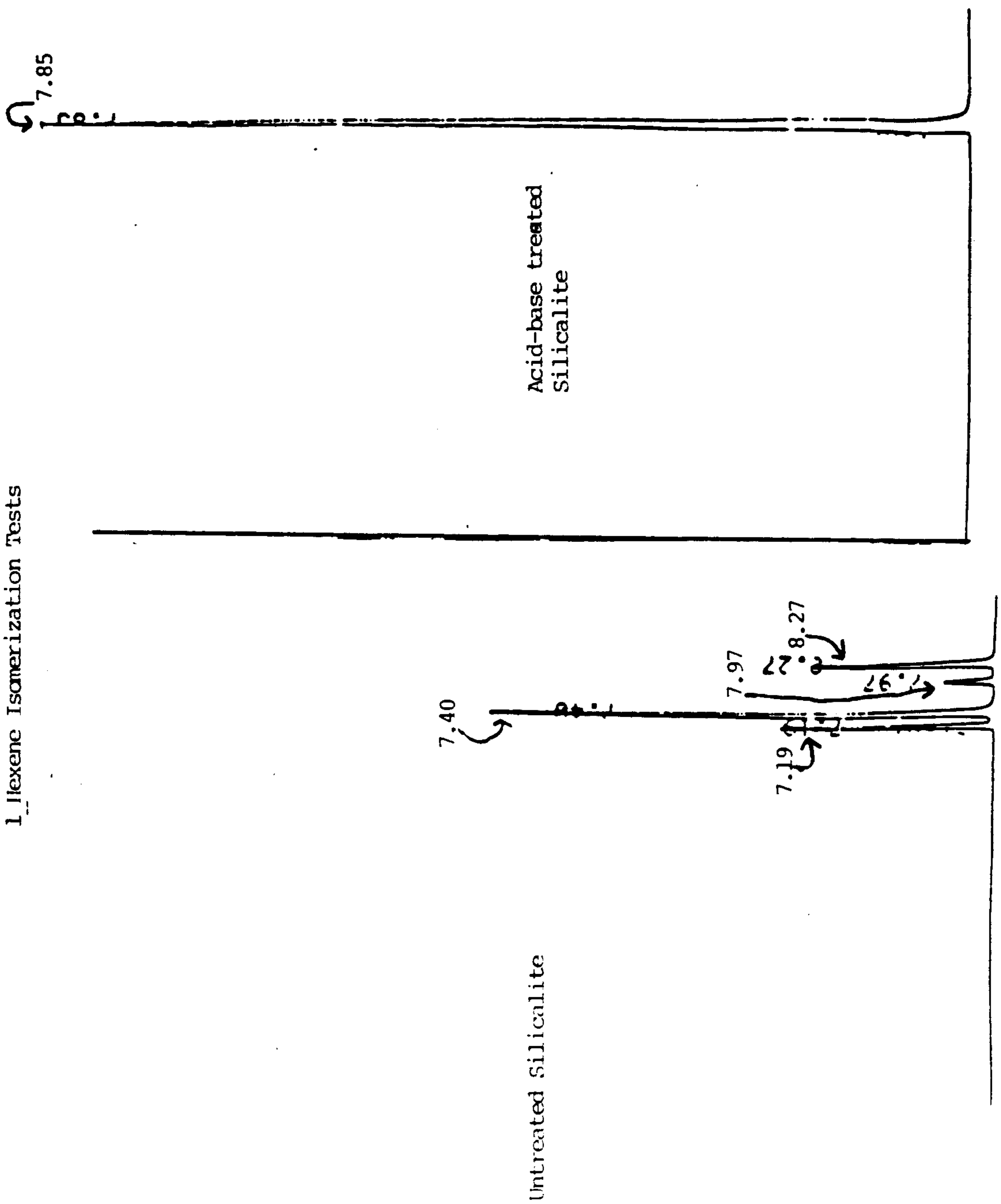

Figure 5

Silicalite Acid Washed and $NH_3$ Neutralized